# EUROPEAN PATENT APPLICATION

(11) **EP 4 261 970 A1**
(43) Date of publication of application: **18.10.2023**
(21) Application number: 22899006.5
(22) Date of filing: 23.11.2022
(51) Int. Cl.: H01M 10/04, H01M 50/342, H01M 50/30, H01M 10/44, H01M 50/317

(54) **FORMATION DEVICE FOR BATTERY CELL**

(30) Priority: 24.11.2021 KR 20210163119
(71) Applicant: LG Energy Solution, Ltd., Seoul 07335 (KR)
(72) Inventor: BAE, Hyun Woo, Daejeon 34122 (KR); JEON, Su Ho, Daejeon 34122 (KR); JI, Chang Min, Daejeon 34122 (KR); YANG, Gi, Daejeon 34122 (KR); CHOI, Jung Ho, Daejeon 34122 (KR)
(74) Representative: Hoffmann Eitle
(86) International application number: PCT/KR2022/018561
(87) International publication number: WO 2023/096324

(57) **Abstract**

Disclosed herein is a battery cell formation apparatus according to the present invention that includes: a formation body part for performing formation of battery cells; a loading buffer part in which battery cells can wait before being put into the formation body part; an unloading buffer part in which battery cells, which are transported from the formation body part when the formation process is finished, can wait; a piercing part located at one side of the loading buffer part and forming a through hole in a gas pocket part of a battery cell accommodated in the loading buffer part; and a sealing part located on one side of the unloading buffer part and sealing a through-hole formed in a battery cell accommodated in the unloading buffer part.

## Description

### [Technical Field]

This application claims the benefit of priority based on Korean Patent Application No. 10-2021-0163119 filed on November 24, 2021.

The present invention relates to a battery cell formation apparatus capable of discharging gas generated during a battery cell formation process to the outside of the battery cell in real time.

### [Background Technology of the Invention]

Generally, secondary batteries can be classified into cylindrical, prismatic, pouch-type, etc. depending on their shape. Among them, the pouch-type secondary battery, because its exterior is made up of pouch exterior materials that is composed of a metal layer(foil) and a synthetic resin multilayer that is coated on the lower and upper surfaces of the metal layer, allows light weighting of a battery by significantly reducing the weight of the battery compared to a cylindrical or a prismatic battery which uses a metal can. A pouch-type battery is also drawing a lot of attention by having an advantage of being able to change into diverse forms.

Such pouch-type secondary battery is stored with an electrode assembly in a layered form. The electrode assembly is connected with an electrode tab and an electrode lead, and the electrode lead is protruded from the pouch exterior material. Such electrode lead is supplied with electric power from external device by being electrically connected to the external device through contact.

A pouch-type secondary battery is manufactured through a process of assembling the battery cell and activating the battery, and in the battery activation process, the secondary battery cell is loaded to an apparatus for charging and discharging, then the charging-discharging is carried out under necessary conditions for a battery activation. As such, the process of carrying out charging-discharging using the apparatus for charging and discharging for the battery activation is called a formation process.

In addition, during the formation process, both sides of the battery cell may be pressed using a means of pressurization such as a jig including a flat-type pressure plate during activation charging, which is also referred to as a jig formation. This jig formation prevents the expansion of a negative electrode during the activation process, induces gas generation by promoting chemical reaction of the battery, and moves the internal gas to a gas pocket part.

However, during the formation process or the jig formation process, gas is generated due to a chemical reaction between an electrolyte and an electrode, which causes the gas pocket part of the battery cell to expand. If the gas pocket part is excessively expanded, interference and collision with a transportation means may occur when the battery cells are taken out of the jig formation device, and a defect in the exterior of the battery cell may occur due to an interference between the battery cells during the transportation process, so there has been a problem in that an excessive amount of pouch exterior material was used to form a sufficient internal space of the gas pocket part.

### [Description of the Invention]

### [Technical Problem]

The present invention is directed to provide a battery cell formation apparatus capable of discharging internal gas to the outside of the battery cell during the formation process so that a gas pocket part does not excessively expand due to generation of internal gas during the formation process.

### [Technical Solution]

The battery cell formation apparatus according to an exemplary embodiment of the present invention includes: a formation body part for performing formation of battery cells; a loading buffer part in which battery cells can wait before being put into the formation body part; an unloading buffer part in which battery cells, which are transported from the formation body part when the formation process is finished, can wait; a piercing part located at one side of the loading buffer part and forming a through hole in a gas pocket part of a battery cell accommodated in the loading buffer part; and a sealing part located on one side of the unloading buffer part and sealing a through-hole formed in a battery cell accommodated in the unloading buffer part.

In an exemplary embodiment of the present invention, the piercing part includes: a piercing unit that forms a through hole while pressing both sides of the gas pocket part; a piercing unit moving member that is coupled to one side of the piercing unit and allows the piercing unit to move forward in the battery cell direction or backward in the opposite direction; and a driving part for driving the piercing unit moving member.

In an exemplary embodiment of the present invention, the piercing unit includes: a pair of gas pocket part pressing members for pressing the gas pocket part; a piercing member coupled to the inner side of the gas pocket part pressing members and forming a through hole by penetrating a part of a pressing surface when the gas pocket part pressing member presses the gas pocket part; a piercing unit body coupled to one side of the pair of gas pocket part pressing members; wherein the pair of gas pocket part pressing members are coupled to be slidable on the piercing unit body to press the gas pocket part.

In an exemplary embodiment of the present invention, the piercing unit moving member includes an extension rod having one side coupled to the piercing unit, wherein the length of the extension rod is extended in the direction of the loading buffer unit or shortened in the opposite direction by the driving part.

In an exemplary embodiment of the present invention, the sealing part includes: a sealing unit that seals a through hole in a state where both sides of the gas pocket part are pressed; a sealing unit moving member that is coupled to one side of the sealing unit and allows the sealing unit to move forward in the battery cell direction or backward in the opposite direction; and a driving part for driving the sealing unit moving member.

In an exemplary embodiment of the present invention, the sealing unit includes: a pair of through hole pressing members for pressing the through hole and its surroundings; a pair of sealing members coupled to each inner side of the pair of through hole pressing members to seal the through hole or its surroundings when the through hole pressing member presses the through hole and its surroundings; and a sealing unit body coupled to one side of the pair of through hole pressing members, wherein the pair of through hole pressing members are coupled to be slidable on the sealing unit body to press the through hole.

In an exemplary embodiment of the present invention, the sealing member includes a pair of sealing tools, wherein the sealing tool heat-compresses the surroundings of the through hole to seal the pouch of the battery cell.

In an exemplary embodiment of the present invention, the sealing unit moving member includes an extension rod having one side coupled to the sealing unit, wherein the length of the extension rod is extended in the direction of the loading buffer unit or shortened in the opposite direction by the driving part.

In an exemplary embodiment of the present invention, the loading buffer part and the unloading buffer part each includes: a transfer part for transferring battery cells; and multiple alignment guide members installed at regular spacings along the transport direction of the battery cells so that multiple battery cells are arranged in an upright state, and a single battery cell is accommodated in the separation space of the alignment guide members.

In an exemplary embodiment of the present invention, the formation body part includes: a frame accommodating multiple battery cells; a charging/discharging part for charging and discharging the battery cell; and a pressing jig that pressurizes the battery cell.

In an exemplary embodiment of the present invention, the formation body part further includes an air supply part, wherein the air supply part is located on the upper part of the frame and supplies air to the inside of the frame through a pipe connected to the inside of the frame.

In an exemplary embodiment of the present invention, the formation body part further includes a gas venting part, wherein the gas venting part is installed on one side of the lower part of the frame and discharges gas generated during the formation process to the outside of the frame through a pipe connected to the inside of the frame.

In an exemplary embodiment of the present invention, the gas venting part includes: a blower fan for discharging gas to the outside; and a filter that absorbs harmful substances contained in the gas.

### [Advantageous Effects]

The formation apparatus of the present invention can from a through hole in a gas pocket part of a battery cell immediately before being put into the formation body part, so that the formation process can be performed in a state where the gas pocket part of the battery cell is opened. Therefore, it is possible to solve the problem of excessive expansion of the gas pocket part.

Also, since the formation body part includes an air supply part and a gas venting part, internal gas generated during the formation process may be naturally discharged.

In addition, the battery cell can be taken out of the formation apparatus by sealing the through hole immediately after the formation process.

### [Brief Description of the Drawings]

FIG 1. is a top view of a battery cell formation apparatus according to an exemplary embodiment of the present invention.
FIG. 2 is a perspective view showing a loading buffer part and a piercing part according to an exemplary embodiment of the present invention.
FIG. 3 is a perspective view showing a loading buffer part or an unloading buffer part.
FIG. 4 is a schematic diagram of the top view of FIG. 1.
FIG. 5 is a perspective view of a piercing part according to an exemplary embodiment of the present invention.
FIG. 6 is a diagram illustrating a piercing operation of the piercing part of FIG. 5.
FIG. 7 is an exploded perspective view of the piercing unit of FIG. 5
FIG. 8 is a perspective view of a sealing part according to an exemplary embodiment of the present invention.
FIG. 9 is an exploded perspective view of a sealing unit according to an exemplary embodiment of the present invention.
FIG. 10 illustrates a configuration of a through hole sealing according to various exemplary embodiments.
FIG. 11 illustrates a pressure jig according to an exemplary embodiment of the present invention.
FIG. 12 is a side view of a formation body part according to an exemplary embodiment of the present invention.
FIG. 13 is a top view of a formation apparatus according to another exemplary embodiment of the present invention.

### [Reference Numerals]

10: BATTERY CELL
100: BATTERY CELL FORMATION APPARATUS
110: FORMATION BODY PART
111: FRAME
112: PRESSURE JIG
113: AIR SUPPLY PART
114: GAS VENTING PART
120: LOADING BUFFER PART
130: UNLOADING BUFFER PART
140: PIERCING PART
150: SEALING PART
160: LOADER/UNLOADER
121: ALIGNMENT GUIDE MEMBER
122: TRANSFER PART
141: PIERCING UNIT
141a, 141a': GAS POCKET PART PRESSING MEMBER
141b, 141b': PIERCING MEMBER
141c: PIERCING UNIT BODY
141d: SLIDING PART
141e: PRESSURE PAD
142: PIERCING UNIT MOVING MEMBER
143: DRIVING PART
151: SEALING UNIT
151a, 151a': THROUGH HOLE PRESSING MEMBER
151b, 151b': SEALING MEMBER
151c: SEALING UNIT BODY
151d: SLIDING PART
151e: PRESSURE PAD
152: SEALING UNIT MOVING MEMBER
153: DRIVING PART

### [Best Mode for Carrying Out the invention]

Since the present invention may have various modifications and various forms, specific exemplary embodiments are illustrated in the diagrams and described in detail in the text. However, it should not be interpreted as limited to commonly used meanings or dictionary meanings, and should be interpreted with meanings and concepts which are consistent with the technological scope of the present invention.

The terms "comprise," "include" and "have" used herein designate the presence of characteristics, numbers, steps, actions, components or elements described in the specification or a combination thereof, and it should be understood that the possibility of the presence or addition of one or more other characteristics, numbers, steps, actions, components, elements or a combination thereof is not excluded in advance. In addition, when a part of a layer, a film, a region or a plate is disposed "on" another part, this includes not only a case in which one part is disposed "directly on" another part, but a case in which a third part is interposed therebetween. In contrast, when a part of a layer, a film, a region or a plate is disposed "under" another part, this includes not only a case in which one part is disposed "directly under" another part, but a case in which a third part is interposed therebetween. In addition, in the specification of the present invention, "on" may include not only a case of disposed on an upper part but also a case of disposed on a lower part.

In the present invention, the meaning of sealing a through hole is a concept that includes both sealing the through hole or sealing the surroundings of the through hole.

Hereinafter, the present invention will be described in detail.

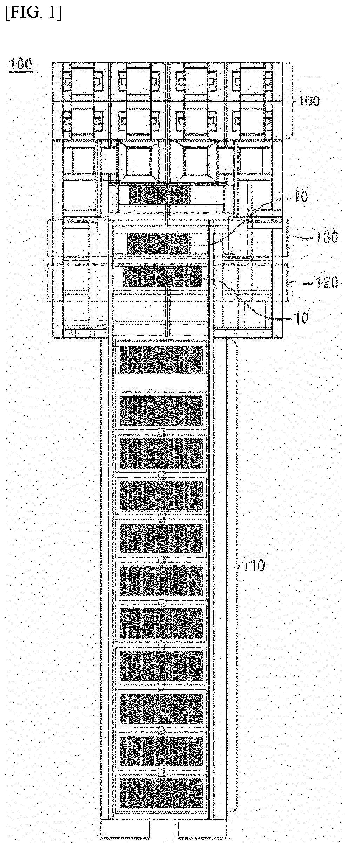

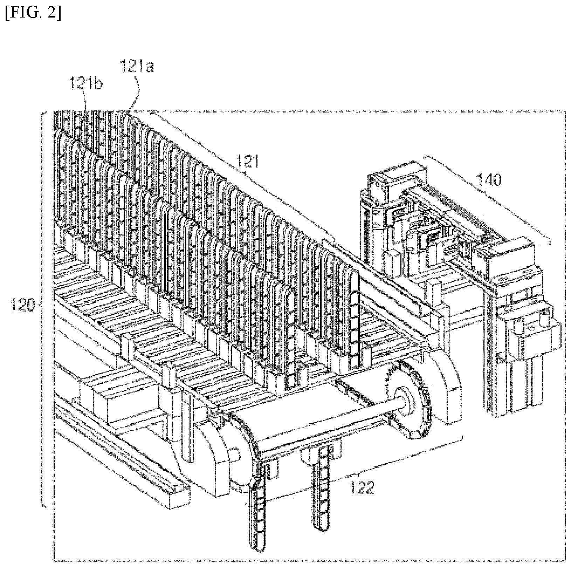

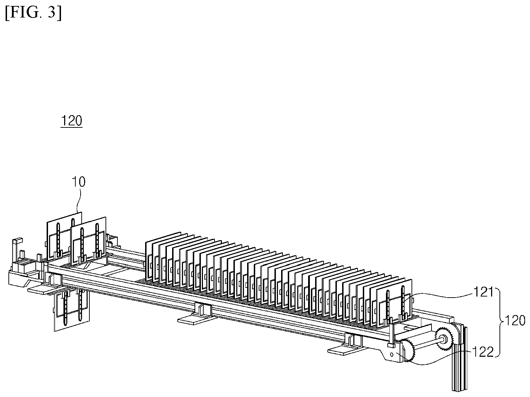

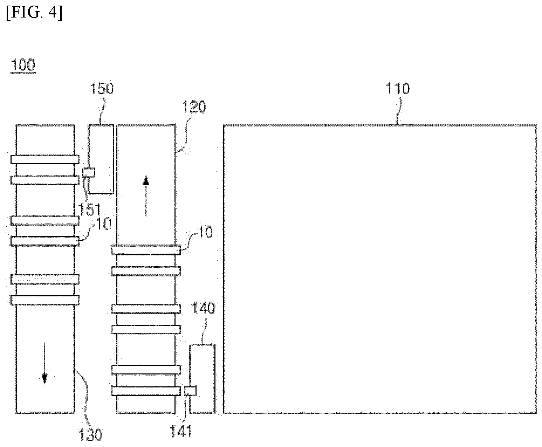

FIG 1. is a top view of a battery cell formation apparatus according to an exemplary embodiment of the present invention, FIG. 2 is a perspective view showing a loading buffer part and a piercing part according to an exemplary embodiment of the present invention, FIG. 3 is a perspective view showing a loading buffer part or an unloading buffer part, and FIG. 4 is a schematic diagram of the top view of FIG. 1

Referring to these diagrams, the battery cell formation apparatus 100 according to the present invention includes: a formation body part 110 for performing formation of battery cells; a loading buffer part 120 in which a battery cell 10 can wait before being put into the formation body part; an unloading buffer part 130 in which battery cells, which are transported from the formation body part when the formation process is finished, can wait; a piercing part 140 located at one side of the loading buffer part and forming a through hole in a gas pocket part of a battery cell accommodated in the loading buffer part; and a sealing part (not shown) located on one side of the unloading buffer part and sealing a through-hole formed in the battery cell accommodated in the unloading buffer part.

The battery cell formation apparatus of the present invention includes a piercing part and a sealing part. The piercing part forms a through hole in the gas pocket part of the battery cell before the battery cell is inserted into the formation body part, and the sealing part seals the through hole of the battery cell immediately after being taken out of the formation body part. Therefore, since the formation apparatus of the present invention performs the formation process on the battery cells having through holes formed in the gas pocket part, gas generated during the formation process is discharged through the through holes to prevent excessive expansion of the gas pocket part, and accordingly, the occurrence of defects during the transport process is reduced, so there is no need to change the design of the pouch.

The formation body part 110 activates the battery cell while charging and discharging under a set charging and discharging condition. The formation body part 110 may be configured to charge and discharge the battery cell in a pressurized state.

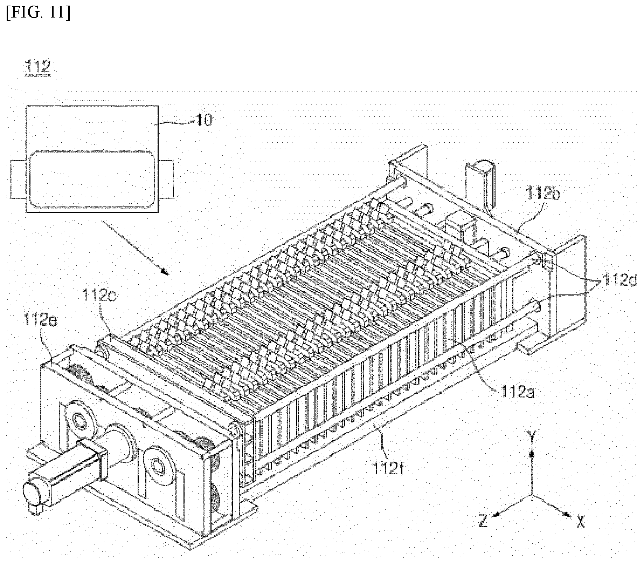

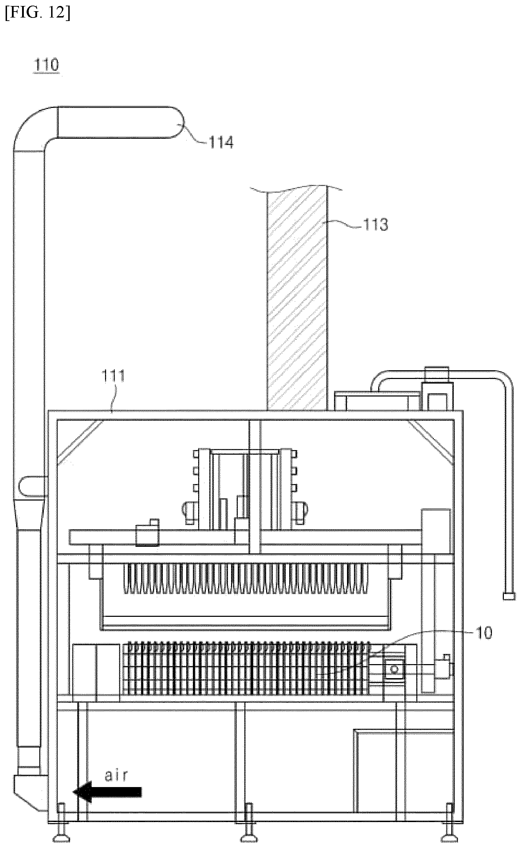

FIG. 11 shows a pressing jig according to an exemplary embodiment of the present invention, FIG. 12 is a side view of a formation body part according to an embodiment of the present invention. Referring to these drawings, the formation body part 110 according to an exemplary embodiment of the present invention includes a charging and discharging part (not shown) for charging and discharging battery cells; and a pressing jig 112 for pressurizing the battery cell.

FIG. 11 shows a pressing jig 112 according to an exemplary embodiment of the present invention, and the pressing jig 112 may further include: a pressure plate 112a installed in numbers side by side, coupled to each other to enable simple adjustment, and configured such that the battery cell 10 may be interposed in a gap formed between every pressure plates; a support member 112b installed for support; a moving member 112c installed to face the support member 112b; and a pressure driving part 112e for allowing pressure on both sides of the battery cell 10 between the pressure plates 112a to be applied and released by moving the guide member 112d and the moving member 112c forward and backward for guiding the pressure plate 112a to move in the spacing adjustment direction.

The pressure plate 112a is for pressurizing the battery cell 10, and is installed in numbers vertically side by side between the support member 112b and the moving member 112c so as to simultaneously press multiple battery cells 10. It is coupled to each other so that the spacings between one another can be adjusted by the forward and backward movement of the moving member 112c, and the battery cell 10 is inserted into the gap formed between every pressure plates.

In the charging and discharging process of the battery cell 10, the pressure plate 112a may be configured to move in the spacing adjustment direction (z-axis direction) by the guide member 112d to be described below in order to apply pressure to the battery cell 10, and a pressure plate 112a may be provided with a sliding coupling part (not shown) coupled so that a guide member 112d can slide therethrough.

The support member 112b is installed for support. For example, it may be installed perpendicular to the frame 112f installed on the surface, and as another example, it may be installed to be elastically supported by an elastic support member.

The moving member 112c is installed to face the support member 112b, and is moved forward and backward by the pressure driving part 112e to press and release the pressure plate 112a.

The guide member 112d guides multiple pressure plates 112a to move in the spacing adjustment direction, and for this purpose, it may be composed of an axis member in which one end is fixed to the support member 112b and the other end is fixed to the moving member 112c, so that it is placed in the arrangement direction (z-axis direction) of the pressure plate 112a, and a plurality of them may be provided side by side.

The pressure driving part 112e moves the moving member 112c back and forth so that the battery cell 10 positioned between the pressure plates 112a is pressed and released from both sides. To this end, it can be configured in a variety of ways such as using the reciprocating motion of a cylinder (not shown) or converting the rotational force of a motor into a linear motion.

The loading buffer part 120 is a space prepared for the battery cells 10 to wait before being put into the formation body part 110, and the battery cells 10 are placed in the loading buffer part 120 by the loader/unloader 160. As shown in FIG. 2 and FIG. 3, the loading buffer part 120 includes a transfer part 122 for transferring the battery cell 10; and multiple alignment guide members 121 installed at certain spacings along the transferring direction of the battery cells so that multiple battery cells 10 can be arranged in an upright state, and it has a structure in which a single battery cell 10 is accommodated within the spacings between the alignment guide members 121. Here, the upright state of the battery cell 10 may refer to a state in which the gas pocket part is located in the upper part and the electrode assembly accommodating part is located in the lower part.

The loading buffer part 120 can accommodate multiple battery cells 10, and as shown in FIG. 3 and FIG. 4, it has a structure in which multiple battery cells 10 arranged in a row can be transferred in the direction of the arrow.

Referring to FIG. 2, the loading buffer part 120 may include multiple alignment guide members 121 and may have a structure in which a battery cell is inserted between one guide member and an adjacent guide member.

A single guide member 121 may include a pair of guide bars 121a, 121b, and they may be spaced apart from each other to have one guide bar 121a support the right side of the battery cell 10, and the other guide bar 121b support the left side of the battery cell 10. The guide bars 121a, 121b have a predetermined width, and extend in the height direction of the battery cell. The heights of the guide bars 121a, 121b may be slightly lower than or slightly higher than the height of the battery cell 10. When a piercing unit to be described later approaches the gas pocket part of the battery cell 10 to form a through hole, the guide member 121 is located in an area that does not interfere with the piercing unit.

Referring to FIG. 2 to FIG. 4, the transfer part 122 may be a conveyor belt that continuously transfers multiple battery cells 10, but is not limited thereto. In one specific example, the transfer part transfers the battery cell 10 to an appropriate location around the piercing part 140 so that the piercing unit 140 can easily perform the piercing process, and when the piercing process is performed by the piercing part 140, the transfer operation is temporarily suspended, and when the piercing process is finished, the transfer operation is resumed for the piercing process of the battery cell at the rear of the battery cell in which the piercing process is completed.

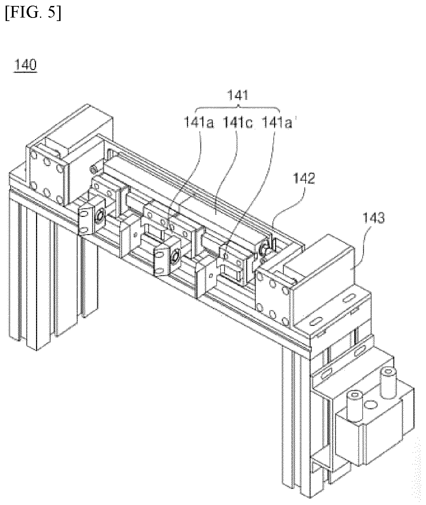

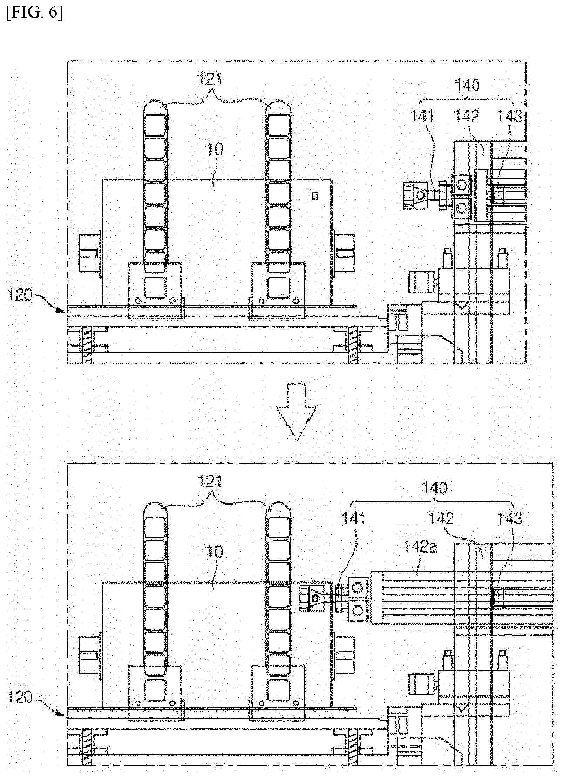

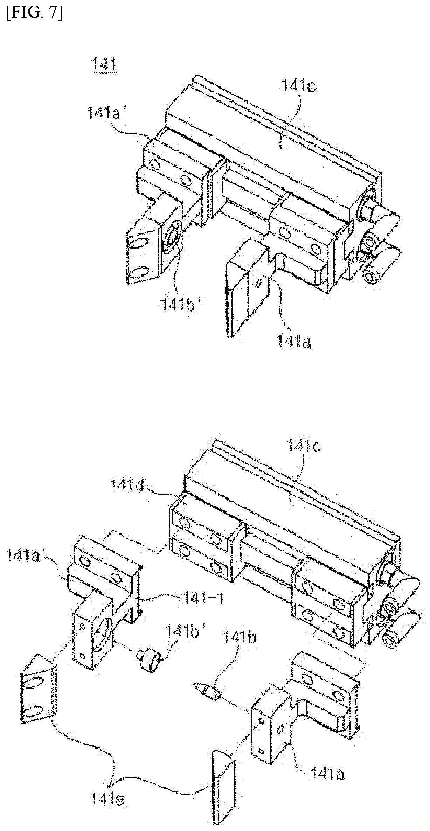

FIG. 5 is a perspective view of a piercing part according to an exemplary embodiment of the present invention, FIG. 6 is a diagram showing a piercing operation of the piercing part of FIG. 5, and FIG. 7 is an exploded perspective view of a piercing unit according to an exemplary embodiment of the present invention.

Referring to these diagrams, the piercing part 140 according to an exemplary embodiment of the present invention includes: a piercing unit 141 that forms a through hole in a state of pressing both sides of the gas pocket part; a piercing unit moving member 142 coupled to one side of the piercing unit 141 so that the piercing unit moves forward in the battery cell direction or backward in the opposite direction; and a driving part 143 for driving the piercing unit moving member 142.

In an exemplary embodiment of the present invention, the piercing unit 141 includes: a pair of gas pocket part pressing members 141a, 141a' for pressing the gas pocket part; piercing members 141b, 141b' coupled to the inside of the gas pocket part pressing members 141a, 141a' and penetrate a portion of the pressing surface to form a through hole when the gas pocket part pressing members 141a, 141a' press the gas pocket part; and a piercing unit body 141c coupled to one side of the pair of gas pocket part pressing members 141a, 141a', wherein the pair of gas pocket part pressing members 141a, 141a' has a structure in which it is coupled to be able to slide on the piercing unit body 141c in order to press the gas pocket part.

The gas pocket part pressing members 141a, 141a' are members for pressing and fixing the gas pocket part of the battery cell 10 accommodated in the loading buffer part 120. When the piercing members 141b, 141b' form through holes on the gas pocket part, the gas pocket part pressing members 141a, 141a' press the gas pocket part of the battery cell 10 so that the battery cell can remain fixed.

These gas pocket part pressing members 141a, 141a' have a pressing surface 141-1 with a predetermined area on the inside facing the battery cell 10 so that they can press by contacting both sides of the gas pocket part in the thickness direction. The piercing members 141b, 141b' are coupled to a partial region of the pressure surface 141-1. The configuration of the piercing members 141b, 141b' is not limited in its shape or material as long as it can form a through hole in the pouch.

In one specific example, the piercing members 141b, 141b' are paired with an acicular member 141b with a sharp distal end and an acicular member sheath 141b' provided with an indentation indented to the inside by a length of the sharp protrusion of the acicular member. The acicular member 141b is coupled to one of the paired gas pocket part pressing members 141a, and the acicular member sheath 141b' is coupled to the remaining gas pocket part pressing member 141a'. However, the piercing member is not limited to this embodiment, and may be, for example, a punching mold instead of an acicular member, and various methods disclosed at the time of filing of the present invention may be employed.

In order to prevent damage to the battery case during the pressing of the gas pocket part pressing members 141a, 141a', an elastic pressure pad 141e may be coupled to a side extended part of the pressing member. Here, the side extended part refers to a part of one side extending toward the battery cell from the gas pocket part pressing member.

Referring to FIG. 5, the piercing unit body 141c has one side coupled to the gas pocket part pressing members 141a, 141a', and the other side coupled to the piercing unit moving member 142.

Referring to FIG. 7, the piercing unit body 141c includes a sliding part 141d on a surface coupled to the gas pocket part pressing members 141a, 141a', so that the pair of gas pocket part pressing members 141a, 141a' is configured to be able to slide so as to move away from each other or toward each other.

The gas pocket part pressing members 141a, 141a' slide in a direction toward each other when pressing the gas pocket part, and when the piercing process ends, the pair of gas pocket part pressing members 141a, 141a' slide in a direction away from each other to release the pressured state. The pair of gas pocket part pressing members may press with the gas pocket part interposed therebetween, and in this case, when sliding for pressing the battery cell, the sliding movement can be paused at a point where the distance between each other equates to the thickness of the gas pocket part.

The piercing unit moving member 142 is configured such that the piercing unit 141 moves forward in the battery cell direction to perform the piercing process, or moves backward to the original position after the piercing unit 141 ends the piercing process.

Referring to FIG. 6, in one specific example, the piercing unit moving member 142 includes an extension rod 142a having one side thereof coupled to the piercing unit 141 on the inside, and the extension rod 142a has a structure in which the length is extended in the direction of the battery cell 10 loaded to the loading buffer part 120 or shortened in the opposite direction by the driving part 143.

The piercing unit moving member 142 has an inner space accommodating the extension rod 142a therein, and the extension rod 142a is inserted into this inner space.

The length of the extension rod 142a extends from the inside of the piercing unit moving member 142 to allow the piercing unit 141 to approach the battery cell 10 direction, and accordingly, as shown in the bottom view of FIG. 6, the piercing unit 141 moves in the direction of the battery cell. When the piercing process by the piercing unit 141 is finished, the extension rod 142a is inserted into the piercing unit moving member 142 as its length becomes shortened, and accordingly, the piercing unit 141 returns to its original position.

The operation of the piercing unit 141 of the present invention will be described by referring to FIG. 6. The bottom view of FIG. 6 illustrates the piercing unit 141 approaching the battery cell 10 to proceed the piercing process, and the top view of FIG. 6 illustrates the piercing unit 141 before approaching the battery cell. As described above, the piercing unit moves forward or backward in the battery cell direction by the operation of the extension rod 142a of the piercing unit moving member 142. Here, the extension rod 142a is driven by the driving part 143.

When the piercing unit 141 approaches the battery cell 10 to an extent that it can perform the piercing process, the extension rod 142a stops extending in the direction of the battery cell. Thereafter, the pair of gas pocket part pressing members 141a, 141a' slide on the piercing unit body 141c to be close to each other by a distance sufficient enough to press the gas pocket part, and when these gas pocket part pressing members 141a, 141a' press the gas pocket part, the acicular member 141b forms a through hole on the gas pocket part by piercing through a part of the pressing surface.

The unloading buffer part 130 is a space in which the battery cell 10, which is transported from the formation body part when the formation process is finished, can wait. A sealing process of sealing the through hole is performed in the unloading buffer part 130, and when the process of forming the sealing part is finished, the battery cell is taken out of the formation apparatus of the present invention by the loader/unloader 160.

In the same manner as the loading buffer part 120, the unloading buffer part 130 includes a transfer part for transferring the battery cells; and multiple alignment guide members installed at regular spacings along the transferring direction of the battery cells so that multiple battery cells 10 can be arranged in an upright state, and it has a structure in which a single battery cell is accommodated within the separation space between the alignment guide members.

The unloading buffer part 130 can transfer multiple battery cells 10 while accommodating them, and as shown in FIG. 3, it has a structure in which multiple battery cells 10 arranged in a row move in the direction of the arrow.

Referring to FIG. 4, the only difference from the loading buffer part is that the sealing part 150 is located on one side of the unloading buffer part 130, and since the fact that it includes an alignment guide member and a transfer part is the same as the loading buffer part, a detailed description of the alignment guide member and the transfer part of the unloading buffer part will be replaced with the description of the alignment guide member and the transfer part of the loading buffer part.

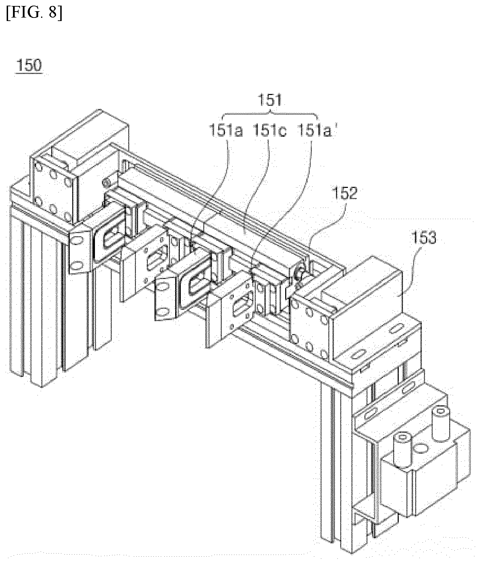

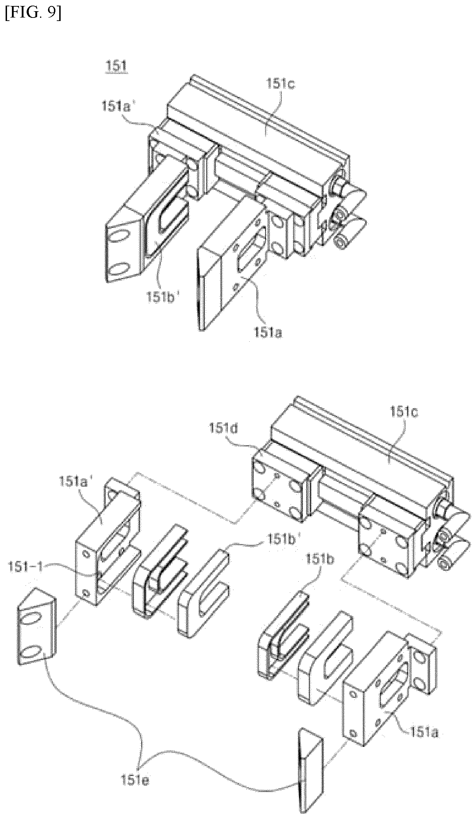

FIG. 8 is a perspective view of a sealing part according to an exemplary embodiment of the present invention, and FIG. 9 is an exploded perspective view of a sealing unit according to an exemplary embodiment of the present invention. Referring to these diagrams, the sealing part 150 according to an exemplary embodiment of the present invention includes: a sealing unit 151 that seals the through hole in a state where both sides of the gas pocket part are pressed; a sealing unit moving member 152 coupled to one side of the sealing unit 151 and allows the sealing unit 151 to move forward in the battery cell direction or backward in the opposite direction; and a driving part 153 for driving the sealing unit moving member 152.

The sealing unit 151 includes: a pair of through hole pressing members 151a, 151a' for pressing the through hole and its surroundings; a pair of sealing members 151b, 151b' coupled to each inner side of the pair of through hole pressing members 151a, 151a' to seal the through hole or its surroundings when the through hole pressing member 151a, 151a' presses the through hole and its surroundings; and a sealing unit body 151c coupled to one side of the pair of through hole pressing members 151a, 151a', and the pair of through hole pressing members 151a, 151a' are coupled to be slidable on the sealing unit body 151c to press the through hole.

The through hole pressing members 151a, 151a' are members for pressing and fixing the through hole of the battery cell accommodated in the unloading buffer part and its surroundings. When the sealing members 151b, 151b' seal the through hole formed in the gas pocket part of the battery cell, the through hole pressing members 151a, 15 1a' press the battery cell so that the battery cell can maintain its fixed state.

Such through hole pressing members 151a, 151a' have a pressing surface 151-1 with a predetermined area on the inside facing the battery cell so that they can press by contacting both sides of the battery cell 10 in the thickness direction. The sealing members 151b, 151b' are coupled to a part of the pressing surface 151-1. The shape of the sealing member 151b is not particularly limited as long as it can seal the through hole formed in the gas pocket part.

Referring to FIG. 9, in one specific example, the sealing members 151b, 151b' include a pair of sealing tools 151b, 151b' capable of sealing the surroundings of the through hole, and the sealing tool heat-seals the pouch by heat-compressing the surroundings of the through hole. The sealing tool may be a hard metal material, and since metal materials have excellent thermal conductivity, it is advantageous for sealing. When the gas pocket part including the through hole and its surroundings is interposed between the pair of sealing tools 151b, 151b' the sealing tools 151b, 151b' press both sides of the pouch. Here, the sealing tool may press the pouch at a high temperature by being heated by a heating member, and the innermost layer of the pouch is melted and heat-sealed.

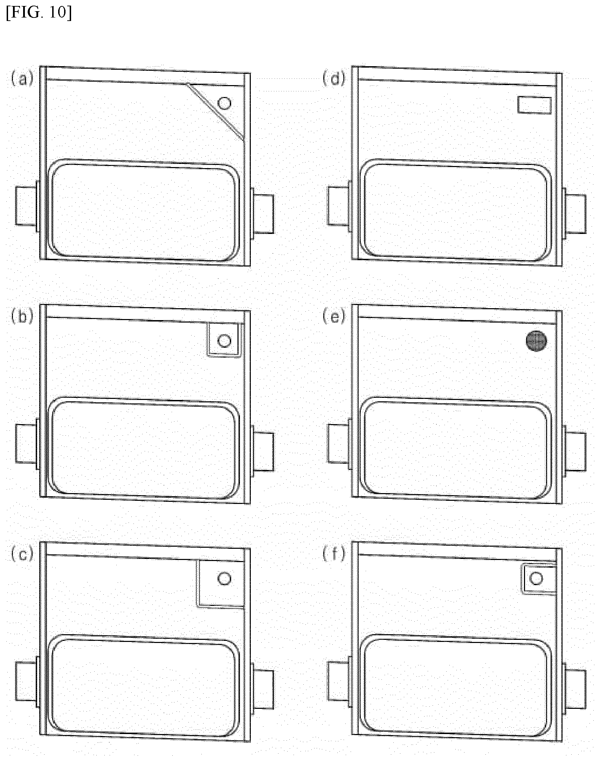

FIG. 10 illustrates a through hole sealing shape according to various types of sealing tools of the present invention. FIG. 10(b) shows a state in which the surroundings of the through hole is sealed by a "U"-shaped sealing tool 151b illustrated in FIG. 9. Besides "U" shape, the shape of the sealing tool may be "-" shape, "L" shape, " 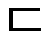 " shape, or the like. However, the sealing tool is not limited to this embodiment, and various methods disclosed at the time of filing of the present invention may be employed. FIG. 10(a) illustrates a sealing shape in which the surroundings of the through hole is sealed by the "-"-shaped sealing tool, FIG. 10(c) illustrates a sealing shape in which the surroundings of the through hole is sealed by the "L"-shaped sealing tool, and FIG. 10(f) illustrates a sealing shape in which the surroundings of the through hole is sealed by the " 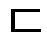 "-shaped sealing tool, respectively.

In another specific example, the sealing member may be configured to attach a tape for sealing an area including the through hole. In this case, the through hole is sealed in a form of FIG. 10(d).

In another specific example, the sealing member may be configured to bond the through hole. Bonding is to apply a curable adhesive component to a partial region including the through hole, and the through hole is sealed in a form of FIG. 10(e).

In order to prevent damage to the pouch when the through hole pressing members 151a, 151a' are pressing, an elastic pressure pad 151e may be coupled to a side extended part of the through hole pressing members 151a, 151a'.

The sealing unit body 151c has one side coupled to the through hole pressing members 151a, 151a', and the other side coupled to the sealing unit moving member 152.

Referring to FIG. 9, the sealing unit body 151c includes a sliding part 151d on a surface coupled to the through hole pressing members 151a, 151a', thereby the pair of through hole pressing members 151a, 151a' is configured to be able to slide so as to move away from each other or toward each other.

The through hole pressing members 151a, 151a' slide in a direction toward each other when pressing the through hole and its surroundings, and when the sealing process ends, the pair of gas pocket part pressing members 141a, 141a' slide in a direction away from each other to release the pressured state. The pair of through hole pressing members may press with the gas pocket part interposed therebetween, and in this case, when sliding for pressing the battery cell, the sliding movement can be paused at a point where the distance between each other equates to the thickness of the gas pocket part.

The sealing unit moving member 152 is configured such that the sealing unit 151 moves forward in the battery cell direction to perform the sealing process, or moves backward to the original position after the sealing unit 151 ends the sealing process.

Referring to FIG. 8 and FIG. 9, the sealing unit moving member 152 has one side coupled to the sealing unit 151, and has an inner space accommodating an extension rod 152a therein so that the sealing unit 151 can move in the direction where the battery cell 10 is located, and the extension rod 152a is inserted into this inner space.

The extension rod 152a extends from the inside of the sealing unit moving member 152 to bring the sealing unit 151 closer to the battery cell 10 direction loaded to the unloading buffer part 130, and accordingly, the sealing unit moving member 152 moves in the direction of the battery cell. When the sealing process ends, the extension rod 152a is inserted back to the inside of the sealing unit moving member 152. Accordingly, the sealing unit returns to its original position.

Since the operation process of the sealing unit approaching the battery cell is the same as the operation process of the piercing unit approaching the battery cell, a description thereof will be replaced with the description of the operation process of the piercing unit described with reference to FIG. 6, and further description will be omitted.

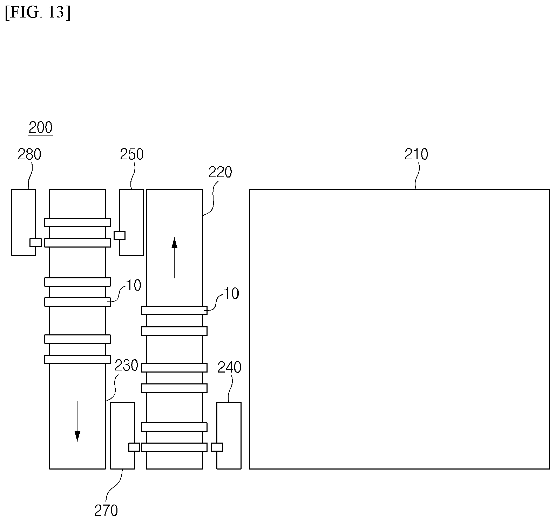

FIG. 13 is a top view of a formation apparatus according to another exemplary embodiment of the present invention. Referring to FIG. 13, the formation apparatus 200 according to another exemplary embodiment of the present invention includes: a formation body part 210 performing formation of a battery cell; a loading buffer part 220 in which a battery cell 10 can wait before being put into the formation body part 210; an unloading buffer part 230 in which a battery cell 10, which is taken out of the formation body part when the formation process is finished, can wait; a first and a second piercing part 240, 270 located on both sides of the loading buffer part 220 and forming a through hole on a gas pocket part of a battery cell 10 accommodated in the loading buffer part 220; and a first and a second sealing part 250, 280 loaded on both sides of the unloading buffer part 230 and sealing a through hole formed in a battery cell 10 accommodated in the unloading buffer part 230.

The exemplary embodiment illustrated in FIG. 13 is different from the above-described exemplary embodiment (the exemplary embodiment illustrated in FIG. 4) in that it each includes two piercing parts and two sealing parts. In the activation process, depending on the case, the process of charging the battery may be performed twice or more, and accordingly, there may be cases where the process of forming a through hole and sealing the through hole needs to be performed twice or more. Thus, the formation apparatus of the exemplary embodiment illustrated in FIG. 13 includes two piercing parts and two sealing parts.

On the other hand, the two piercing parts 240, 270 are respectively located on one side and the other side of the battery cell with the battery cell interposed therebetween, and the two sealing parts 250, 280 are also respectively located on one side and the other side of the battery cell with the battery cell 10 interposed therebetween. When the second piercing part 270 forms a through hole for the second time, the through hole cannot be formed again in the surroundings of the through hole formed by the first piercing part 240, so the second piercing part 270 is located on the opposite side of the first piercing part 240 with respect to the battery cell 10 in order to form a through hole at a position opposing the position of a through hole formed by the first piercing part 240. For the same reason as the piercing part, the sealing part has the first sealing part and the second sealing part positioned to face each other with respect to the battery cell.

FIG. 12 is a side view of a formation body part according to an exemplary embodiment of the present invention. Referring to FIG. 12, the formation body part 110 according to an exemplary embodiment of the present invention further includes an air supply part 113, and the air supply part 113 is located on the upper part of the frame 111 and supplies air to the inside of the frame through a pipe connected to the inside of the frame 111. The blowing air discharged from the air supply part serves to maintain a constant temperature inside the frame by mixing with the air inside the frame whose temperature has risen due to the formation process. In addition, it also serves to dilute the internal gas generated during the formation process.

In addition, the formation body part 110 further includes a gas venting part 114, and the gas venting part 114 is installed on one side of the lower part of the frame 111, and uses a pipe connected to the inside of the frame to discharge the gas generated during the formation process to the outside of the frame.

In one specific example, the gas venting part includes: a blower fan for discharging gas to the outside; and a filter that absorbs harmful substances contained in the gas.

In the above formation apparatus of the present invention, the formation process can be performed in a state where the gas pocket part of the battery cell is opened, and internal gas generated during the formation process can be naturally discharged.

As above, the present invention has been described with reference to exemplary embodiments, but it should be understood by those skilled in the art that the present invention can be variously modified and changed by adding, changing, or deleting components within the scope that does not depart from the spirit of the present invention described in the accompanying claims, which will also be said to be included within the scope of the present invention.

## Claims

1. A battery cell formation apparatus, comprising:
a formation body part for performing formation of battery cells;
a loading buffer part in which battery cells can wait before being put into the formation body part;
an unloading buffer part in which battery cells, which are transported from the formation body part when the formation process is finished, can wait;
a piercing part located at one side of the loading buffer part and forming a through hole in a gas pocket part of a battery cell accommodated in the loading buffer part; and
a sealing part located on one side of the unloading buffer part and sealing the through-hole formed in the battery cell accommodated in the unloading buffer part.

2. The battery cell formation apparatus of claim 1, the piercing part comprises:
a piercing unit that forms a through hole while pressing both sides of the gas pocket part;
a piercing unit moving member that is coupled to one side of the piercing unit and allows the piercing unit to move forward in the battery cell direction or backward in the opposite direction; and
a driving part for driving the piercing unit moving member.

3. The battery cell formation apparatus of claim 2, the piercing unit comprises:
a pair of gas pocket part pressing members for pressing the gas pocket part;
a piercing member coupled to the inner side of the gas pocket part pressing members and forming a through hole by penetrating a part of a pressing surface when the gas pocket part pressing member presses the gas pocket part; and
a piercing unit body coupled to one side of the pair of gas pocket part press members;
wherein the pair of gas pocket part pressing members are coupled to be slidable on the piercing unit body to press the gas pocket part.

4. The battery cell formation apparatus of claim 2, the piercing unit moving member comprises an extension rod having one side coupled to the piercing unit,
wherein the length of the extension rod is extended in the direction of the loading buffer unit or shortened in the opposite direction by the driving part.

5. The battery cell formation apparatus of claim 1, the sealing part comprises:
a sealing unit that seals the through hole in a state where both sides of the gas pocket part are pressed;
a sealing unit moving member that is coupled to one side of the sealing unit and allows the sealing unit to move forward in the battery cell direction or backward in the opposite direction; and
a driving part for driving the sealing unit moving member.

6. The battery cell formation apparatus of claim 5, the sealing unit comprises:
a pair of through hole pressing members for pressing the through hole and its surroundings;
a pair of sealing members coupled to each inner side of the pair of through hole pressing members to seal the through hole or its surroundings when the through hole pressing member presses the through hole and its surroundings; and
a sealing unit body coupled to one side of the pair of through hole pressing members,
wherein the pair of through hole pressing members are coupled to be slidable on the sealing unit body to press the through hole.

7. The battery cell formation apparatus of claim 6, the sealing member comprises a pair of sealing tools,
wherein the sealing tool heat-compresses the surroundings of the through hole to seal the pouch of the battery cell.

8. The battery cell formation apparatus of claim 5, the sealing unit moving member comprises an extension rod having one side coupled to the sealing unit,
wherein the length of the extension rod is extended in the direction of the unloading buffer unit or shortened in the opposite direction by the driving part.

9. The battery cell formation apparatus of claim 1, the loading buffer part and the unloading buffer part each comprises:
a transfer part for transferring battery cells; and
multiple alignment guide members installed at regular spacings along the transport direction of the battery cells so that multiple battery cells are arranged in an upright state, and
a single battery cell is accommodated in the separation space of the alignment guide members.

10. The battery cell formation apparatus of claim 1, the formation body part comprises:
a frame accommodating multiple battery cells;
a charging/discharging part for charging and discharging the battery cell; and
a pressing jig that pressurizes the battery cell.

11. The battery cell formation apparatus of claim 10, the formation body part further comprises an air supply part,
wherein the air supply part is located on the upper part of the frame and supplies air to the inside of the frame through a pipe connected to the inside of the frame.

12. The battery cell formation apparatus of claim 10, the formation body part further comprises a gas venting part,
wherein the gas venting part is installed on one side of the lower part of the frame and discharges gas generated during the formation process to the outside of the frame through a pipe connected to the inside of the frame.

13. The battery cell formation apparatus of claim 12, the gas venting part comprises:
a blower fan for discharging gas to the outside; and
a filter that absorbs harmful substances contained in the gas.
